# EUROPEAN PATENT APPLICATION

(11) **EP 2 607 687 A1**
(43) Date of publication of application: **26.06.2013**
(21) Application number: 12158441.1
(22) Date of filing: 07.03.2012
(51) Int. Cl.: F03D 5/00

(54) **Sail system for generating energy from a fluid flow**

(30) Priority: 21.12.2011 IT MI20112333
(71) Applicant: ZanettiStudios S.r.l., 20122 Milano (IT)
(72) Inventor: Zanetti, Giancarlo, I-20122 Milano (IT)
(74) Representative: Pezzoli, Ennio

(57) **Abstract**

A system (100) for generating energy from a flow of a fluid is proposed. The system comprises energy conversion means (110), sail means (165) switchable between an active condition for being carried away from energy conversion means by the fluid flow and a passive condition in which such carrying away is minimized. The system further comprises connection means (120,155) for connecting the sail means with the energy conversion means, the energy conversion means converting part of a kinetic energy provided to the sail means by the fluid flow into said energy when the sail means in the active condition are carried away from the energy conversion means, recovery means (110) for recovering the sail means in the passive condition towards the energy conversion means, and switching means (145, 170L, 170R) for switching the sail means from the passive condition to the active condition and from the active condition to the passive condition upon the reaching of a first distance and a second distance, respectively, of the sail means from the energy conversion means, the second distance being greater than the first distance. In the solution according to one embodiment of the present invention the switching means comprise a telescopic structure (145), and the connection means comprise a first cable structure (120) connected between the telescopic structure and the energy conversion means and a second cable structure (155) connected between the telescopic structure and the sail means, the first cable structure and the second cable structure winding onto the telescopic structure and unwinding from the telescopic structure alternatively during each switching of the sail means between the passive conditions and the active condition for varying an extension of the telescopic means between a shortened extension in the passive condition in which an unfolding of the sail means is reduced and an elongated extension in the active condition in which the unfolding of the sail means is increased.

## Description

The solution according to one or more embodiments of the present invention relates to the field of the generation of energy. More specifically, this solution relates to the generation of energy from a fluid flow.

A number of energy generating systems - or simply generators - that produce useful energy (e.g., of electrical type) by converting another form of energy are known in the art; in particular, in recent years there has been a great development of the generators based on renewable energy sources.

In more detail, various types of generators have been developed that are able to convert kinetic energy of a fluid flow (e.g., wind and sea currents). Considering for exemplary purpose windpower generators, there are two main generator types. A first type consists of big turbines installed on pillars; the fluid flow imparts a rotary motion to the blades of a turbine from which electric energy is generated. A second type of windpower generators comprises generators based on elements that oppose resistance to the kinetic force of the fluid, such as parachutes.

In general, the parachute generators may be switched between a closed condition and an open condition (during which they are moved by the fluid flow). Moreover, an aerostatic balloon may be provided for maintaining the parachute at a working altitude. The parachute and the aerostatic balloon are connected by a cable to an energy converter placed on the ground. The parachute is opened and closed alternately. When opened, the parachute is carried away from the energy converter by the force of the fluid flow (thereby allowing the energy converter to generate energy). The parachute is then closed and returned close to the energy converter (by using a fraction of the generated energy), so as to be opened and closed again cyclically.

There are also parachute generators with double section (each one comprising a parachute and an aerostatic balloon), wherein the sections are connected by a single cable that passes through an alternating-type converter. In this case, the parachutes are opened and closed alternately. When a first parachute is opened, it is carried away from the energy converter by the force of the fluid flow (so as to generate useful energy); at the same time, a second parachute is closed and is brought close to the energy converter by the first parachute (without using the useful energy produced by the energy converter).

The above-mentioned generators have a very low environmental impact, are simple, reliable and require very low maintenance; these qualities make the generators very cheap, but at the same time with excellent energy efficiency. In the case of parachute windpower generators, indeed, it is possible to exploit high-altitude winds. As it is known, the wind speed increases moving away from the ground; for example, at 800 m above ground level the wind has an average speed of 6-10 m/s for about 5000-7000 hours per year (compared to 4-5 m/s for 2000-4000 hours per year at an altitude of 80 m above ground level, *i.e.,* the working altitude of the turbine windpower generators).

However, such parachute windpower generators are affected by a problem relating to the switching between opening and closing of the parachute itself. In fact, this requires a non-negligible amount of energy since it has to be performed in opposition to the wind flow.

In the prior art, this problem was solved by controlling guide wires for opening and closing of the parachute directly from the ground. This solution has the disadvantage of being complex and prone to failures even in the simple case of twisting of the guide wires. When such twisting occurs (e.g., due to strong turbulences) the parachute should be brought to the ground and the guide wires should be released (for preventing damages to the parachutes and to the respective switching means), which task is complex and time consuming.

It is also possible to equip the parachute with a motor, but this should be able to generate a high intensity torque in order to open/close the parachute in opposition to the wind strength, and therefore it should be with a heavy weight (thereby reducing the conversion efficiency) and with a power supply provided from the ground, for example, by a power wire, which would make the system very dangerous in the event of a breaking thereof.

A solution that solves at least partly the above mentioned problems is disclosed in the international patent application WO 2010/015720 of the same Applicant, wherein a system for generating energy from a fluid flow is described, where a pair of parachute means, each one independently switchable between an active condition and a passive condition, is able to slide along connection means. In operation, the parachute means of the pair switch between their active condition and passive condition in phase opposition with each other; the parachute means in the active condition causes the parachute means in the passive condition to slide along the connection means up to a stable position.

In general terms, the solution according to one or more embodiments of the present invention is based on the idea of using opposite winding and unwinding of a first and a second cable structure for actuating an automatic opening and closing of an element of resistance to the fluid flow.

A solution according to one or more embodiments of the invention, as well as additional features and its advantages will be better understood with reference to the following detailed description of an embodiment thereof, given purely by way of a non-restrictive indication and without limitation, to be read in conjunction with the attached figures (wherein corresponding elements are denoted with equal or similar references and their explanation is not repeated for the sake of brevity). In this respect, it is expressly understood that the figures are not necessarily drawn to scale (with some details that may be exaggerated and/or simplified) and that, unless otherwise specified, they are simply intended to conceptually illustrate the structures and procedures described herein. In particular:
FIG.1 illustrates a system for generating energy according to an embodiment of the present invention in an initial condition;
FIG.2 illustrates the system for generating energy of FIG.1 in an opening condition of sail means;
FIG.3 illustrates the system for generating energy of FIG. 1 in a carrying away condition of an aerostatic module, and
FIG.4 illustrates the system for generating energy of FIG.1 in a retrieval condition of the aerostatic module.

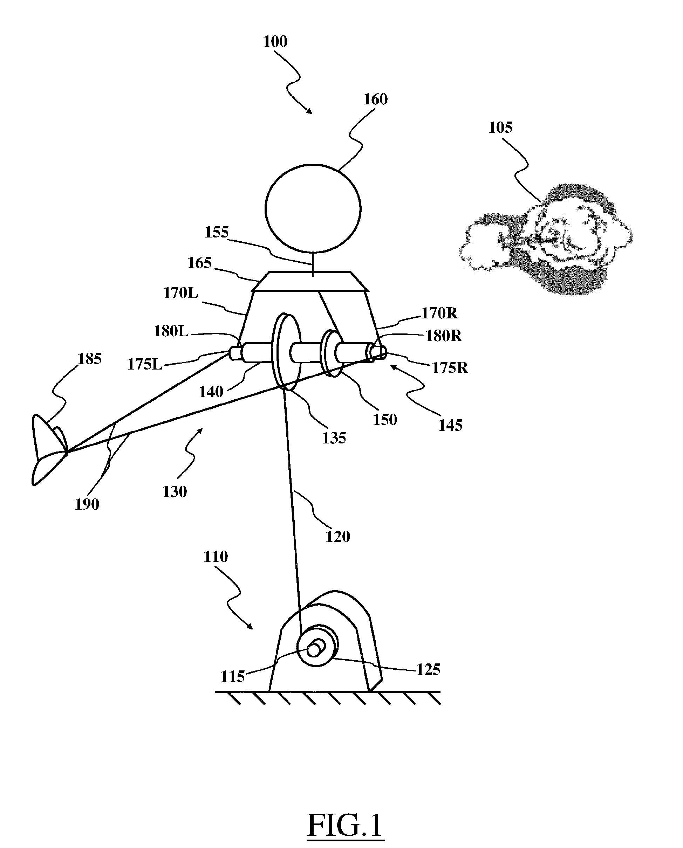

With reference to FIG.1, there is illustrated a system 100 for generating energy according to an embodiment of the present invention, in an initial condition.

In detail, the system for generating energy, or simply generator 100, is adapted to generate a form of useful energy - for example, electricity - from a kinetic energy associated with a fluid flow, such as, for example, a flow of air (wind) as shown pictorially in the figure and indicated by the reference 105. The generator 100 is bound to the ground and comprises an energy conversion element, for example, a converter 110 able to generate electricity from a rotation (in a first rotation direction) of a transmission shaft thereof, or simply shaft 115. In addition, the converter 110 comprises a retrieval element, for example, a winding electric motor (integrated in the converter and not shown) adapted to use, preferably although not limitatively, a portion of the energy produced by the converter 110 to rotate the shaft 115 (in a second rotation direction, opposite the first one).

A first cable structure, such as a first connecting cable 120 (e.g., formed by a metallic and/or synthetic wire) is secured by a first end to a first winding element, such as a generator pulley 125, preferably coupled with the shaft 115 of the converter 110 (*i.e.,* fixed so as to have a central axis thereof corresponding to a central axis of the shaft 115). In this way, the connecting cable 120 may be unwound from/wound onto the generator pulley 125 according to a rotation in the first/second direction of the shaft 115. A second end (opposite to the first one) of the connecting cable 120 is bound to an aerostatic module 130. In particular, the connecting cable 120 is fixed to a second winding element, such as a first pulley 135 of the aerostatic module 130 (having a radius r1) advantageously coupled with a central body, or sleeve 140 - which, preferably, has a substantially cylindrical shape - of a telescopic structure 145, comprised in the aerostatic module 130. Advantageously, the first pulley 135 may be integral with the sleeve 140 of the telescopic structure 145. In addition, the first pulley 135 comprises a blocking element (of the mechanical and/or electromechanical type, such as a vice or a friction brake, not shown in the figures) provided in order to selectively block an unwinding/winding of the connecting cable 120 attached to the first pulley 135 (*i.e.,* the blocking element is adapted to inhibit a rotation of the first pulley 135).

Similarly, a third winding element, such as a second pulley 150 of the aerostatic means 130 (having a radius r2, preferably such that r2 < r1, preferably 1.5 r2 ≤ r1 ≤ 2.5 . r2, for example, r1 ≥ 2 . r2) may also be advantageously coupled with the sleeve 140 of the telescopic structure 145. A first end of a second cable structure, such as a second connecting cable 155, is fixed to such second pulley 150. Again, the second pulley 150 is integral with the sleeve 140 of the telescopic structure 145. In addition, the second pulley 150 comprises a further blocking element (not shown in the figures, and similar to that comprised in the first pulley 135) adapted to selectively block an unwinding/winding of the second connecting cable 155 attached to the second pulley 150 (*i.e.,* the block element is adapted to inhibit rotation of the second pulley 150).

The second connecting cable 155 is fixed through a second end thereof to an aerostatic element, such as a balloon 160, which is inflated with an element or a mixture of elements having a density lower than the one of the fluid that surrounds the generator 100 (for example, in the case of air, helium He in gas phase). Advantageously, the balloon 160 is designed to support the aerostatic module 130 immersed in the fluid at a predetermined distance from the converter 110 (in the example at issue, floating in air). In addition, the second connecting cable 155 is bound (for example, through a middle portion thereof) to an element of resistance to the fluid flow, such as a sail 165 (shown in FIG.1 being furled). A pair of sets of ropes, such as a first rope 170L and a second rope 170R, are each one fixed to the sail 165 at opposite edges thereof and at a free end of a first screw 175L and of a second screw 175R, respectively, of the telescopic structure 145. Preferably, the free ends of the two screws 175L and 175R are provided with suitable fastening elements (not visible in the figure) adapted to gyroscopically fasten the ropes 170L and 170R. In other words, the fastening between the free ends of the two screws 175L and 175R and the ropes 170L and 170R (as well as any other cable fastened thereto) is designed in such a way to prevent entanglements of the ropes 170L and 170R during rotations of the two screws 175L and 175R.

The two screws 175L and 175R are coupled with the sleeve 140 of the telescopic structure 145 at two opposite ends thereof. For example, a threaded portion (not shown in FIG.1) of each one of the screws 175L and 175R engages corresponding threaded holes 180L and 180R formed at the ends of the sleeve 140. Advantageously, the threads of the screw 175L and of the threaded hole 180L on the left are formed with a direction opposite the threads of the screw 175R and of the threaded hole 180R on the right (e.g., clockwise and counter-clockwise, respectively). In this way, a rotation of the sleeve 140 in a first direction unscrew both screws 175L and 175R that extend from the respective threaded holes 180L and 180R; on the contrary, a rotation in a second direction tightens both the screws 175L and 175R that shorten going back into the respective threaded holes 180L and 180R.

Preferably, although not limitatively, the aerostatic module 130 comprises a stabilizing element 185, for maintaining the aerostatic module 130 in a functional disposition with respect to the fluid flow (e.g., horizontal with respect to the ground and transversal with respect to the direction of the fluid flow). The stabilizing element 185 is connected to the telescopic structure 145, for example, at the free ends of the screws 175L and 175R via connecting elements, such as third connecting cables 190 (in a similar manner as described with respect to the ropes 170L and 170R). Thanks to the stabilizing element 185, it is possible to avoid any tangling of the connecting cables 120, 155 and 190 and/or the ropes 170L and 170R - or at least substantially reduce the possibility of such tangling - and, consequently, a resulting malfunction of the generator 100.

After describing the generator 100, it will now be described a complete cycle of operation thereof, referring to FIGs.1-5.

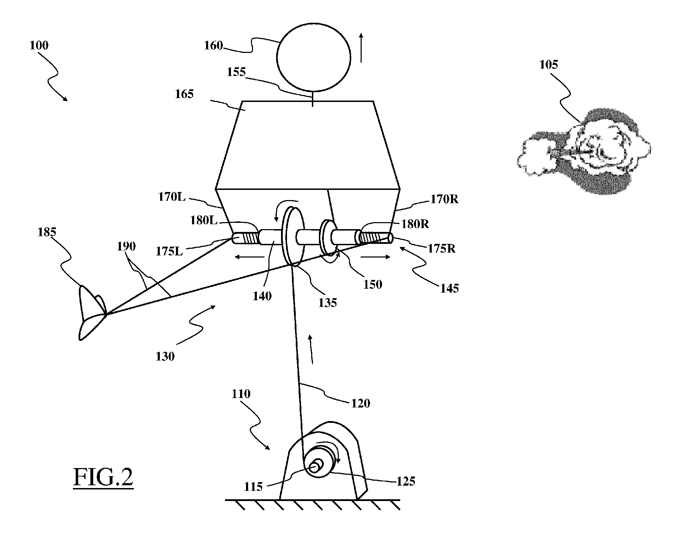

Initially (as shown in FIG.1), both the pulleys 135 and 150, provided on the telescopic structure 145, are maintained blocked by the respective blocking means, while the converter 110 allows a free rotation of the generator pulley 125 coupled with the shaft 115 of the converter 110. Therefore, (as shown in FIG.2) the aerostatic module 130 rises to a first distance from the converter 110, such as an operative altitude (e.g., 800m), driven by the balloon 160. Advantageously, such operative altitude is determined essentially by a ratio between the density of the element (or mixture of elements) within the balloon 160 and a density of the fluid in which the aerostatic module 130 is immersed and, in inverse manner, by a mass (*i.e.,* by the weight) of the aerostatic module 130.

At the operative altitude, the blocking means unblocks the cables 120 and 155 connected to the respective pulleys 135 and 150 of the aerostatic module 130.

Advantageously, the blocking means may be actuated for unblocking the respective pulleys 135 and 150 either through an electro-mechanical element - for example, controlled via radio frequency signals - or mechanically - for example, through a mechanism that unblocks the pulleys in response to changes in strain of the first connecting cable 120 and/or the second connecting cable 155 at the reaching of the operative altitude.

The balloon 160 may thus ascend further in altitude by a predetermined height h (being not limited by the weight of the aerostatic module 130 once the second pulley 150 has been unblocked), thus unwinding a portion of the connecting cable 155 wound on the second pulley 150, thereby causing a rotation about its longitudinal axis of the sleeve 140 (integral with the second pulley 150). At the same time, the rotation of the sleeve 140 causes the winding of a portion of the first connecting cable 120 about the first pulley 135 (which is also integral with the sleeve 140) - leading to a reapproaching between the aerostatic module 130 and the converter 110.

Advantageously, the difference between the radius r1 of the first pulley 135 with respect to the radius r2 of the second pulley 150 (preferably, with r1> r2) allows the balloon 160 to rise to the height h, while maintaining the telescopic structure 145 substantially at the operative altitude, thereby causing the rotation of the sleeve 140.

Moreover, the rotation of the sleeve 140 causes the extension of both the screws 175L and 175R that come out, unscrewing themselves, from the threaded holes 180L and 180R, respectively, formed in the sleeve 140, thereby extending the telescopic structure 145 (which reaches an elongated extension). Advantageously, both the screws 175L and 175R come out by a distance *x* determined by the number of rotations performed by the sleeve 140, in turn depending on a length *y* of the portion of connecting cable 155 unwound by the balloon 160 for reaching the height *h*, and by the radius r2 of the second pulley 150.

It is important to note that the upward movement by the height h of the balloon 160 unfold the sail 165 along a direction substantially perpendicular to the ground (where the converter 110 is positioned). At the same time, the extension of the screws 175L and 175R unfolds the sail 165 along a substantially horizontal direction (with respect to the ground).

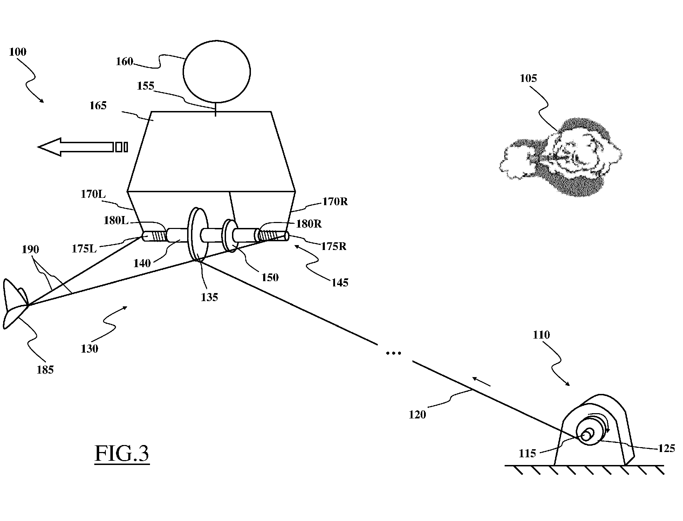

Thanks to the upward movement of the balloon 160 combined with the extension of the screws 175L and 175R, the sail 165 is brought to a fully unfolded condition. Therefore, the sail 165 increases its resistance to the fluid flow 105 from a minimum value (corresponding to a furled condition, illustrated in FIG.1) up to a maximum value proportional to its sail surface Aₛ (in the fully unfolded or hoisted condition, shown in FIG.2). The sail 165 is designed so that the resistance opposed to the fluid flow 105 makes the entire aerostatic module 130 drift along the direction of the fluid flow 105 (by absorbing part of the kinetic energy thereof). In other words, when the sail 165 is unfolded, the aerostatic module 130 is carried away from the converter 110 being driven by a portion of the kinetic energy of the fluid flow 105, which reaches the unfolded sail 165 (as shown in FIG.3).

When the sail 165 is in the fully unfolded condition, the blocking elements of both the pulleys 135 and 150 are actuated again for blocking a rotation thereof. In this way, further rotation of the sleeve 140 is prevented.

The fluid flow 105 performs a work by transferring part of its kinetic energy to the sail 165 and, therefore, to the aerostatic module 130, which is moved. The carrying away of the aerostatic module 130 from the converter 110 causes an unwinding of the first connecting cable 120 from the generator pulley 125 and, thus, a rotation of the shaft 115 with which the same is integrally coupled. The rotation of the shaft 115 has the effect of transferring (at least in part) the kinetic energy associated with the movement of the aerostatic module 130 to the converter 110. The converter 110 is configured for converting the kinetic energy of the rotating shaft 115 (at least in part) into a form of useful energy (e.g., electric energy).

The system 100 is thus able to generate useful energy from the energy associated with the fluid flow 105 (in which it is immersed) unless unavoidable losses due to energy conversion and to non-ideal components comprised in the system 100.

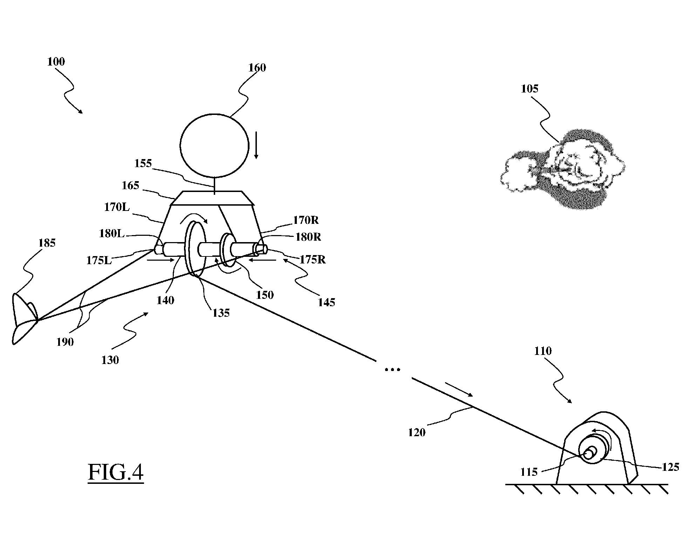

The aerostatic module 130 is driven by the fluid flow 105 up to reach a maximum distance from the converter 110, wherein the portion of the connecting cable 120 being wound on the pulley 125 has been completely unwound. Consequently, a recovery of the aerostatic module 130 begins (shown in FIG.4) in order to return the generator 100 to the initial condition, for example, for starting a new cycle of energy production.

The blocking elements unblock the connecting cables 120 and 155 wound on the respective pulleys 135 and 150 of the aerostatic module 130 (e.g., in response to a radio frequency signal or a strain variation of the first connecting cable 120). The first portion of the connecting cable 120 (previously wound on the second pulley 135 during the rise to the height h of the balloon 160) unwinds thereby causing a revolution of the sleeve 140 of the telescopic structure 145 having an opposite direction with respect to the revolution described above - moreover, the aerostatic module 130 moves away from the converter 110 by a distance equal to the approaching made during the unfolding of the sail described above. Such rotation of the sleeve 140 causes a winding on the second pulley 150 of a portion of the second connecting cable 155 initially wound thereon. As a result, the balloon 160 is pulled back towards the telescopic structure 145, dropping from the height h substantially to the altitude of the telescopic structure 145. Advantageously, the difference in extension of the radius r1 of the first pulley 135 with respect to the radius r2 of the second pulley 150 (preferably, with r1> r2) allows the balloon 160 to be pulled back by the height h, while maintaining the telescopic structure 145 substantially at the operational altitude, thereby causing the rotation of the sleeve 140.

At the same time, the rotation of the sleeve 140 causes the retraction of both the screws 175L and 175R that are screwed into the threaded holes formed in the sleeve 140 of the telescopic structure 145, which shortens. Preferably, during the screwing, the screws 175L and 175R substantially retract by the distance *x* described above.

It is important to note that the balloon 160, by retreating, furls the sail 165 along a direction substantially perpendicular to the ground (*i.e.,* where the converter 110 is placed). At the same time, the screwing of the screws 175L and 175R furls the sail 165 along a direction substantially horizontal to the ground. Therefore, the sail 165 is completely furled and a minimum resistance is opposed to the fluid flow 105 by it (*i.e.,* by exposing only a fraction of its surface As to the fluid flow, as shown in FIG.4).

At the end of the rotation of the sleeve 140 of the telescopic structure 145, the pulleys 135 and 150 are blocked again (e.g., in a manner complementary to that previously described for their unblocking).

At this point, the aerostatic module 130 may be returned to its initial state (shown in FIG.1) to start a new cycle of energy production.

The converter 110 activates the recovery element, which uses a part of the electricity produced by the converter 110 to rotate the shaft 115 in the second rotation direction, opposite the first one. In this way, the connecting cable 120 is wound back onto the pulley 125 by dragging the aerostatic module 130 to the initial state in opposition to the fluid flow.

Thanks to the minimum resistance that the sail 165 opposes to the fluid flow, the aerostatic module 130 may be brought back to the initial condition with low energy consumption (since the frictional forces that develop between the fluid flow 105 and the sail 165 are minimal, as the latter is furled).

Afterwards, a new complete cycle may be started, which takes place in the same way as described above.

The generator 100 according to an embodiment of the present invention allows generating useful energy in a reliable manner and with a switching between the opening (*i.e*., unfolding) and closing (*i.e*., furling) of the element of resistance to the fluid flow that requires extremely reduced consumption of the produced energy with respect to the solutions of the prior art.

Naturally, in order to satisfy local and specific requirements, a person skilled in the art may apply to the solution described above many logical and/or physical modifications and alterations. More specifically, although this solution has been described with a certain degree of particularity with reference to one or more embodiments thereof, it should be understood that various omissions, substitutions and changes in the form and details as well as other embodiments are possible. Particularly, different embodiments of the invention may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the disclosed solution may be incorporated in any other embodiment as a matter of general design choice. In any case, the terms comprising, comprising, having and containing (and any of their forms) should be understood with an open and non-exhaustive meaning (*i.e*., not limited to the recited elements), the terms based on, dependent on, according to, function of (and any of their forms) should be understood as a non-exclusive relationship (*i.e*., with possible further variables involved) and the term a should be understood as one or more elements (unless expressly otherwise stated).

For example, an embodiment of the present invention proposes a system for generating energy from a flow of a fluid (of any type). The system comprises energy conversion means (of any type), sail means (of any type, shape or size) switchable between an active condition to be carried away from energy conversion means by a fluid flow and a passive condition in which such carrying away is minimized. The system also comprises connection means (in any number, of any type, shape or size) for connecting the sail means with the energy conversion means, the energy conversion means converting part of the kinetic energy provided to the sail means by the fluid flow into said energy when the sail means in the active condition are carried away from the energy conversion means. The system also comprises recovering means (in any number, of any type, shape or size) for bringing back the sail means in the passive condition towards the energy conversion means, and switching means (in any number, of any type, shape or size) for switching the sail means from the passive condition to the active condition and from the active condition to the passive condition at the reaching of a first distance and of a second distance, respectively, of the sail means from the energy conversion means, the second distance being higher than the first distance. In the solution according to an embodiment of the invention, the switching means comprises a telescopic structure (of any type, shape or size) and the connection means comprises a first cable structure (of any type, shape or size) connected between the telescopic structure and the energy conversion means and a second cable structure (of any type, shape or size) connected between the telescopic structure and the sail means, the first cable structure and the second cable structure alternately winding onto the telescopic structure and unwinding from the telescopic structure during each switching of the sail means between the passive condition and the active condition for varying an extension of the telescopic means between a shortened extension in the passive condition in which an unfolding of the sail means is reduced and an elongated extension in the active condition in which the unfolding of the sail means is increased.

However, similar considerations apply if the system has a different structure or comprises equivalent components (for example, of different materials), or it has other operative characteristics. In any case, every component thereof may be separated into more elements, or two or more components may be combined together into a single element; moreover, each component may be replicated to support the execution of the corresponding operations in parallel. It is also pointed out that (unless specified otherwise) any interaction between different components generally does not need to be continuous, and it may be either direct or indirect through one or more intermediaries.

However, intermediate functional extensions are not excluded.

In an embodiment of the invention, the sail means comprises a sail (of any type, shape or size) having a first edge and a second edge opposite to each other; the switching means comprises a first ropes set (in any number, of any type, shape or size) connected between the first edge of the sail and a first end of the telescopic means, and a second ropes set (in any number, of any type, shape or size) connected between the second edge of the sail and a second end of the telescopic means.

However, the ropes sets may be connected to positions other than the edges of the sail and the ends on the telescopic means.

In an embodiment of the invention, the telescopic structure comprises a sleeve (of any type, shape or size, see below) for the winding of the first cable structure and the second cable structure, the sleeve having a first axial hole threaded in a first direction and a second axial hole threaded in a second direction, a first screw screwed in the first threaded hole and a second screw screwed in the second threaded hole, the first screw and the second screw having a free end that defines the first end and the second end, respectively, of the telescopic structure.

However, the first end and the second end of the telescopic structure may be provided in other positions other than the free ends of the telescopic structure.

In an embodiment of the invention, the telescopic structure comprises a first pulley and a second pulley (both of any type, see below) integral with the sleeve for the winding of the first and second cable structure, respectively.

However, the telescopic structure may comprise winding/unwinding means other than the first and second pulleys.

In an embodiment of the invention, the first pulley has a first radius and the second pulley has a second radius lower than the first radius.

However, different relations between the first and the second radii are not excluded.

In an embodiment of the invention, the second radius is shorter than a half of the first radius.

However, different ratios between the first and the second radii are not excluded.

In an embodiment of the invention, the switching means comprises blocking means (in any number, of any type, shape or size) for blocking the first cable structure and the second cable structure with respect to the telescopic structure to prevent their winding and unwinding, and actuator means (in any number, of any type, shape or size) for disabling the blocking means at the reaching of the first distance, the first cable structure winding onto the telescopic structure and the second cable structure unwinding from the telescopic structure at the first distance, for activating the blocking means at the reaching of a predetermined unwinding of the second cable structure, for disabling the blocking means at the reaching of the second distance, the second cable structure winding onto the telescopic structure and the first cable structure unwinding from the telescopic structure at the second distance, and for activating the blocking means at the reaching of a predetermined unwinding of the first cable structure.

In an embodiment of the invention, the system further comprises aerostatic means (in any number, of any type, shape or size) coupled with the sail means, the aerostatic means facilitating the winding of the first cable structure onto the telescopic structure and the unwinding of the second cable structure from the telescopic structure at the first distance.

However, other means is not excluded for facilitating the winding of the first cable structure and the unwinding of the second cable structure.

In an embodiment of the invention, the predetermined unwinding of the second cable structure and the predetermined unwinding of the first cable structure correspond to a complete unwinding of the second cable structure and a complete unwinding of the first cable structure, respectively, from the telescopic structure.

However, nothing prevents having the predetermined unwinding of the second cable structure and the predetermined unwinding of the first cable structure correspond to a partial unwinding of the second cable structure and of the first cable structure, respectively.

A different embodiment of the present invention proposes a method for generating energy from a fluid flow. The method comprises the following steps. Sail means, connected through connection means to energy conversion means, is switched between an active condition to be carried away from the energy conversion means by the fluid flow and a passive condition in which such carrying away is minimized. Part of a kinetic energy provided to the sail means by the fluid flow is converted, by means of the energy conversion means, into said energy when the sail means in the active condition is carried away from the energy conversion means. The sail means in the passive condition is recovered towards the energy conversion means. The sail means is switched from the passive condition to the active condition and from the active condition to the passive condition at the reaching of a first distance and of a second distance, respectively, of the sail means from the energy conversion means (with the second distance that is higher than the first distance). In the solution according to an embodiment of the present invention, the connection means comprises a first cable structure connected between the telescopic structure and the energy conversion means, and a second cable structure connected between the telescopic structure and the sail means. The step of switching comprises alternatively winding onto a telescopic structure and unwinding from the telescopic structure the first cable structure and the second cable structure during each switching of the sail means between the passive condition and the active condition for varying an extension of the telescopic structure between a shortened extension in the passive condition for reducing an unfolding of the sail means and an elongated extension in the active condition for increasing the unfolding of the sail means.

However, similar considerations apply if the same solution is implemented with an equivalent method (by using similar steps with the same functions of more steps or portions thereof, removing some steps being non-essential, or adding further optional steps); moreover, the steps may be performed in a different order, concurrently or in an interleaved way (at least in part).

## Claims

1. A system (100) for generating energy from a fluid flow, the system comprising:
Energy conversion means (110),
Sail means (165) switchable between an active condition for being carried away from the energy conversion means by the fluid flow and a passive condition in which such carrying away is minimized,
connection means (120,155) for connecting the sail means with the energy conversion means, the energy conversion means converting part of a kinetic energy provided to the sail means by the fluid flow into said energy when the sail means in the active condition is carried away from the energy conversion means,
recovery means (110) for recovering the sail means in the passive condition towards the energy conversion means, and
switching means (145, 170L, 170R) for switching the sail means from the passive condition to the active condition and from the active condition to the passive condition upon the reaching of a first distance and of a second distance, respectively, of the sail means from the energy conversion means, the second distance being greater than the first distance,
**characterized in that**
the switching means comprises a telescopic structure (145) and wherein the connection means comprises a first cable structure (120) connected between the telescopic structure and the energy conversion means and a second cable structure (155) connected between the telescopic structure and the sail means, the first cable structure and the second cable structure winding onto the telescopic structure and unwinding from the telescopic structure alternatively during each switching of the sail means between the passive condition and the active condition for varying an extension of the telescopic means between a shortened extension in the passive condition in which an unfolding of the sail means is reduced and an elongated extension in the active condition in which the unfolding of the sail means is increased.

2. The system (100) for generating energy according to claim 1, wherein the sail means (165) comprises a sail (165) having a first edge and a second edge opposite to each other, and wherein the switching means (145, 170L, 170R) comprises a first set of ropes (170L) connected between the first edge of the sail and a first end of the telescopic means, and a second set of ropes (170R) connected between the second edge of the sail and a second end of the telescopic means.

3. The system (100) for generating energy according to claim 1 or 2, wherein the telescopic structure (145) comprises a sleeve (140) for the winding of the first cable structure (120) and of the second cable structure (155), the sleeve having a first axial hole (180L) threaded in a first direction and a second axial hole (180R) threaded into a second direction, a first screw (175L) screwed in the first threaded hole and a second screw (175R) screwed in the second threaded hole, the first screw and the second screw having a free end defining the first end and the second end, respectively, of the telescopic structure.

4. The system (100) for generating energy according to claim 3, wherein the telescopic structure (145) comprises a first pulley (135) and a second pulley (150) integral with the sleeve for the winding of the first cable structure (120) and of the second cable structure (150), respectively.

5. The system (100) for generating energy according to claim 4, wherein the first pulley (135) has a first radius (r1) and the second pulley (150) has a second radius (r2) lower than the first radius.

6. The system (100) for generating energy according to claim 5, wherein the second radius (r2) is lower than a half of the first radius (r1).

7. The system (100) for generating energy according to any claim from 1 to 6, wherein the switching means (145, 170L, 170R) comprises blocking means for blocking the first cable structure (120) and the second cable structure (155) with respect to the telescopic structure (145) for preventing their winding and unwinding, and actuator means for disabling the blocking means at the reaching of the first distance, the first cable structure winding onto the telescopic structure and the second cable structure unwinding from the telescopic structure at the first distance, for activating the blocking means at the reaching of a predetermined unwinding of the second cable structure, for disabling the blocking means at the reaching of the second distance, the second cable structure winding onto the telescopic structure and the first cable structure unwinding from the telescopic structure at the second distance, and for activating the blocking means at the reaching of a predetermined unwinding of the first cable structure.

8. The system (100) for generating energy according to claim 7, further comprising aerostatic means (160) coupled with the sail means (165), the aerostatic means facilitating the winding of the first cable structure (120) onto the telescopic structure (145) and the unwinding of the second cable structure (155) from the telescopic structure at the first distance.

9. The system (100) for generating energy according to claim 7 or 8, wherein the predetermined unwinding of the second cable structure (155) and the predetermined unwinding of the first cable structure (120) correspond to a complete unwinding of the second cable structure and a complete unwinding of the first cable structure, respectively, from the telescopic structure (145).

10. A method for generating energy from a fluid flow, the method comprising the steps of:
switching sail means (165), connected by connection means (120,155) to energy conversion means (110), between an active condition for being carried away from the energy conversion means by the fluid flow and a passive condition in which such carrying away is minimized,
converting, by the energy conversion means, part of a kinetic energy provided to the sail means by the fluid flow into said energy when the sail means in the active condition is carried away from the energy conversion means,
recovering the sail means in the passive condition towards the energy conversion means, and
switching the sail means from the passive condition to the active condition and from the active condition to the passive condition upon the reaching of a first distance and of a second distance, respectively, of the sail means from the energy conversion means, the second distance being greater than the first distance,
**characterized in that**
the connection means comprises a first cable structure (120) connected between the telescopic structure and the energy conversion means and a second cable structure (155) connected between the telescopic structure and the sail means, the step of switching comprising winding onto a telescopic structure and unwinding from the telescopic structure the first cable structure and the second cable structure alternatively during each switching of the sail means between the passive condition and the active condition for varying an extension of the telescopic means between a shortened extension in the passive condition in which an unfolding of the sail means is reduced and an elongated extension in the active condition in which the unfolding of the sail means is increased.
